# EUROPÄISCHE PATENTSCHRIFT

(11) **EP 2 036 935 B1**
(45) Veröffentlichungstag und Bekanntmachung des Hinweises auf die Patenterteilung: **29.12.2010**
(21) Anmeldenummer: 08016062.5
(22) Anmeldetag: 11.09.2008
(51) Int. Cl.: C08G 59/62, C08G 59/68

(54) **Lichthärtender thermoplastischer Epoxidharzklebstoff**
Light hardening thermoplastic epoxy resin adhesive
Agent adhésif en résine époxy thermoplastique durcissant à la lumière

(30) Priorität: 13.09.2007 DE 102007043559
(43) Veröffentlichungstag der Anmeldung: 18.03.2009
(73) Patentinhaber: Carl Zeiss Vision GmbH, 73430 Aalen (DE)
(72) Erfinder: Weippert, Hans-Joachim, 73431 Aalen (DE)
(74) Vertreter: Maiwald Patentanwalts GmbH

(56) Entgegenhaltungen:
- WO-A-99/50711
- DE-A1- 2 639 395
- DE-A1- 19 534 664
- US-A- 6 043 295
- US-B1- 6 268 403

## Beschreibung

Die vorliegende Erfindung betrifft eine durch Bestrahlung mit einer Lichtquelle polymerisierbare Klebstoff-Formulierung sowie deren Verwendung zum Blocken oder Kleben von optischen Bauelementen wie Linsen oder Brillenglashalbfabrikaten.

Zur Bearbeitung von optischen Bauelementen, z. B. Schleifen und Polieren von Halbfabrikaten müssen diese auf einer Halterung fixiert werden. Dieser Fixiervorgang wird auch als "Blocken" bezeichnet.

Häufig wird für die Fixierung ein Schmelzwachs oder eine niedrig schmelzende Metalllegierung verwendet, z. B. eine Legierung auf der Basis von Bismuth, Zinn, Cadmium, Indium und Antimon. Aufgrund des niedrigen Schmelzpunktes ist eine verspannungsarme Fixierung möglich. Allerdings stellt die Verwendung solcher Metalllegierungen ein Umwelt- und Gesundheitsrisiko dar.

Alternativ kann die Fixierung durch einen Klebstoff erfolgen, wobei jedoch allgemein folgende Gesichtspunkte zu beachten sind.

Beim Verkleben des optischen Bauelements wie z. B. einer Linse mit der Haltevorrichtung sollten keine oder möglichst geringe Verspannungen auftreten, da diese sich auf die optische Qualität negativ auswirken können. Eine ausreichende Klebkraft und somit eine stabile Fixierung während der Bearbeitung des optischen Elements sollte innerhalb einer möglichst kurzen Zeitspanne erreicht werden.

Weiterhin ist erwünscht, dass die Klebkraft während der Bearbeitung bzw. Fixierung möglichst konstant bleibt und nur unwesentlich von äußeren Faktoren wie Luftfeuchtigkeit oder Einwirkung von Kühlschmiermitteln bzw. Poliersuspensionen beeinträchtigt wird. Nachdem der Bearbeitungsvorgang beendet ist, sollte sich der Klebstoff möglichst problemlos entfernen lassen, ohne Rückstände auf den optischen Flächen zu hinterlassen.

Für das Blocken bzw. Fixieren von optischen Bauelementen wie Linsen oder Halbfabrikaten wurden bisher verschiedene Klebstoffe verwendet, die jedoch der Summe der oben genannten Anforderungen nicht ausreichend genügen.

Bei Schmelzklebern kann die Erwärmung der zu verkittenden Teile zu Verspannungen und manchmal auch zu Glasbruch führen. Die erwärmten Teile müssen vor der Bearbeitung längere Zeit temperiert werden.

Hotmelts sind zum Aufblocken von optischen Bauelementen meist ungeeignet, da sie zu einer nicht tolerierbaren hohen Verspannung der Werkstücke führen.

Kaltkitte auf der Basis peroxidisch gehärteter Acrylate können zu Verspannungen führen, da die Härtungsreaktion eine stark exotherme Temperaturspitze aufweist und diese Klebstoffe üblicherweise eine hohe Volumenschrumpfung bei der Polymerisation zeigen. Die Auflösung der Kittverbindung ist durch Anquellen des ausgehärteten Kitts in polaren Lösungsmitteln möglich, wobei das Polymer selbst jedoch weitgehend unlöslich ist. Die Lösezeiten sowie die häufig auf den optischen Flächen verbleibenden Rückstände sind jedoch meist unakzeptabel.

Kaltkitte auf Epoxidharzbasis mit sekundären Diaminen als Härter ergeben Klebverbindungen, die spannungsarm sind und eine gute Beständigkeit gegenüber den gängigen Bearbeitungsmedien in der Optik wie z. B. Poliersuspensionen aufweisen. Vorteilhaft ist bei diesen Systemen das thermoplastische Verhalten und die gute Löslichkeit in polaren Lösungsmitteln. Wesentlicher Nachteil dieser Kitte ist die lange Aushärtzeit von mindestens 24 Stunden bei Raumtemperatur.

Wieder lösbare Kittverbindungen, die mit UV-reaktiven Acrylatklebern (z. B. Loctite 3791) bzw. mit Thiol-En-Systemen realisiert werden, lassen sich dadurch wieder lösen, dass der ausgehärtete Klebstoff durch warme wässrige Lösungen bzw. polare Lösungsmittel gequollen wird, wobei es zu einer starken Reduzierung der Adhäsion kommt. Dieser Effekt wird durch den Einbau polarer und damit wasserquellbarer Weichsegmente in die Polymermatrix erreicht. Problematisch ist, dass dieser Quelleffekt auch durch Luftfeuchtigkeit bewirkt werden kann. Daher wird bei einer längeren Liegezeit gekitteter Optikteile die Adhäsion soweit verringert, dass es bereits während der Bearbeitung zur ungewollten Ablösung kommen kann. Die Ablösezeiten in heißem Wasser sind bei großflächigen Verklebungen wie bei Brillenglas-Halbfabrikaten unakzeptabel. Weiterhin bleibt bei Acrylatklebern die Oberfläche der Klebestelle meist klebrig, was als störend empfunden wird. (Sauerstoff - Inhibierung bei Härtung mit UVA - Licht). Nachteilig bei Thiol-En-Systemen ist die gegenüber Acrylatklebern und Epoxidharzsystemen deutlich geringere Adhäsion.

EP-A-0641281 offenbart ein Verfahren zum Fixieren einer Linse auf einem Halteelement unter Verwendung eines Klebstoffs auf der Basis eines Polymerharzes, das an beiden Enden eine Acrylfunktionalität aufweist.

US 5763075 offenbart eine thermoplastische Zusammensetzung zum Fixieren von Linsen auf der Basis eines Caprolacton-Homopolymers oder -Copolymers.

DE 2639395 offenbart eine photopolymerisierbare Zusammensetzung, die ein erstes organisches Material mit einer Epoxidfunktionalität von mehr als 1,5, ein zweites organisches Material mit einer Hydroxylfunktionalität von mindestens 1 und einen Photoinitiator aufweist. Gemäß DE 2639395 führt eine Hydroxylfunktionalität, die die eine geringe innere Festigkeit und Zugfestigkeit aufweisen. Daher bevorzugt die Lehre von DE 2639395 die Verwendung polyfunktioneller hydroxylhaltiger Materialien.

US 6268403 B1 beschreibt eine photopolymerisierbare Zusammensetzung, welche einen kationischen Photopolymerisationsstarter und zumindest ein cycloaliphatisches Epoxyalkoholmonomer umfasst.

WO 99/50711 beschreibt eine flüssige Zusammensetzung, welche (a) durch Strahlung vernetzbare und kationisch polymerisierbare organische Verbindungen, (b) zumindest einen Kationenmodifikator mit mindestens zwei reaktiven Gruppen oder ein Polyetherpolyol und (c) einen kationischen Photopolymerisationsstarter umfasst.

Unter Berücksichtigung der oben geschilderten Nachteile ist es daher eine Aufgabe der vorliegenden Erfindung, die umweltschädlichen Metalllegierungen durch eine umweltfreundlichere Zusammensetzung zu ersetzen, wobei diese Zusammensetzung ein möglichst schnelles und verspannungsarmes Fixieren optischer Bauelemente wie Linsen sowie ein möglichst problemloses Ablösen der optischen Elemente am Ende der Bearbeitung ermöglicht. Dies darf jedoch nicht auf Kosten einer zu geringen oder nachlassenden Klebkraft während der Bearbeitungszeit erreicht werden. Weiterhin muss der auspolymerisierte Klebstoff geeignet sein, bei der mechanischen Bearbeitung der gekitteten optischen Baugruppe ggf. spanend abgearbeitet zu werden, ohne dabei das Werkzeug mit Abrieb zu-zuschmieren.

Diese Aufgabe wird gelöst durch die Bereitstellung einer polymerisierbaren Zusammensetzung, wie sie in Anspruch 1 definiert wird.

Wie nachfolgend noch eingehender beschrieben wird, ermöglicht die erfindungsgemäße polymerisierbare Zusammensetzung eine Polymerisation, die nicht zu einem duroplastischen hochmolekularen Kunststoffmaterial, sondern vielmehr zu einem thermoplastischen Oligomer oder thermoplastischen niedermolekularen Polymer führt, das einerseits eine ausreichende Adhäsionswirkung für eine gute Fixierung des optischen Elements aufweist, andererseits eine ausreichende Löslichkeit in polaren Lösungsmitteln für eine leichte Ablösung am Ende der Bearbeitung besitzt.

Im Rahmen der vorliegenden Erfindung bezieht sich der Begriff "polymerisierbar" auch auf die Fähigkeit bzw. Eignung, unter geeigneten Bedingungen in ein Oligomer überführt zu werden.

Unter einem einwertigen Alkohol ist im Rahmen der vorliegenden Verbindung jedes Molekül zu verstehen, das nur eine OH-Gruppe aufweist.

Der Begriff "Hydroxylfunktionalität" wird in seiner üblichen Weise verwendet und bezeichnet die durchschnittliche Anzahl der OH-Gruppen pro Molekül und ergibt sich, indem man die Anzahl aller OH-Gruppen durch die Anzahl der Moleküle mit OH-Gruppe(n) dividiert. Bei einer Hydroxylfunktionalität von 1,0 umfasst die erfindungsgemäße polymerisierbare Zusammensetzung ausschließlich einwertige Alkohole und bei einem Wert von mehr als 1,0 liegen auch mehrwertige Alkohole vor.

Aufgrund der Hydroxylfunktionalität im Bereich von 1,0 bis 1,25 liegen daher in der erfindungsgemäßen Zusammensetzung ganz überwiegend einwertige Alkohole und nur zu einem geringen Anteil mehrwertige Alkohole (d.h. Polyole) vor. Dies bewirkt, dass in einer anschließenden Polymerisation bzw. Härtung der polymerisierbaren Zusammensetzung die Bildung eines duroplastischen Kunststoffes vermieden und stattdessen ein thermoplastisches Oligomer bzw. thermoplastisches niedermolekulares Polymer erhalten wird.

Indem das molare Verhältnis der Epoxidgruppen der cycloaliphatischen Epoxidverbindung zu den Hydroxylgruppen des einwertigen Alkohols auf einen Wert eingestellt wird, der im Bereich von 0,9:1,0 bis 4,0:1,0 liegt, kann durch eine anschließende Polymerisation ein thermoplastisches Oligomer bzw. Polymer erhalten werden, das einerseits eine ausreichende Adhäsionswirkung für eine gute Fixierung des optischen Elements aufweist, andererseits eine ausreichende Löslichkeit in polaren Lösungsmitteln für eine leichte Ablösung am Ende der Bearbeitung besitzt.

Die Löslichkeit (Lösegeschwindigkeit, Vollständigkeit, Rückstandsverhalten) des ausgehärteten Hilfskitts, d.h. des Materials, das nach erfolgter Aushärtung der polymerisierbaren Zusammensetzung vorliegt, wird durch das Verhältnis Epoxy : Hydroxy beeinflusst. Je näher dieses Verhältnis bei 1:1 ist, desto besser ist die Löslichkeit. Ein zufrieden stellendes Löslichkeitsverhalten erhält man aber noch, wenn das molare Verhältnis im Bereich von 0,9:1,0 bis 4,0:1,0 liegt.

Durch die Verwendung eines cycloaliphatischen Epoxids kann bei der anschließenden Photopolymerisation eine zufrieden stellende Reaktionsgeschwindigkeit erhalten werden.

In einer bevorzugten Ausführungsform weist das cycloaliphatische Epoxid zumindest eine, bevorzugter zwei Epoxidgruppen pro Molekül auf, die in Form eines an den cycloaliphatischen Ring anellierten Oxiranrings vorliegen. Bevorzugte cycloaliphatische Epoxide sind z. B. 3,4-Epoxycyclo-hexylmethyl-3,4-epoxycyclohexan-carboxylat (z. B. Cyracure Resin UVR-6110 von Dow Chemical), Bis-(3,4-epoxycyclohexylmethyl)-adipat, 2-(3,4-epoxycyclohexyl-5,5-spiro-3,4-epoxy)-cyclohexan-1,3-dioxan, oder deren Gemische.

Monoepoxide bzw. Epoxide mit nur einer reaktiven Gruppe (bei der kationischen UV - Polymerisation) sind für Kettenabbruchreaktionen bei der UV-Härtung geeignet. In diesem Zusammenhang können Cyclohexenoxid, Vinylcyclohexendioxid, Vinylcyclohexenmonoxid genannt werden.

Es können auch Gemische eines cycloaliphatischen Diepoxids und cycloaliphatischen Monoepoxids verwendet werden. Die Monoepoxidverbindung kann dabei als Reaktivverdünner bewirken, dass die Viskosität der Zusammensetzung verringert wird. In einer bevorzugten Ausführungsform beträgt das molare Verhältnis von Diepoxidverbindung zu Monoepoxidverbindung 1:1 1 bis 10:1, bevorzugter 1:1 1 bis 5:1, noch bevorzugter 1:1 1 bis 3:1.

Bevorzugt liegt das cycloaliphatische Epoxid in einer Menge von 20 bis 80 Gew.-%, bevorzugter 25 bis 60 Gew.-%, noch bevorzugter 30 bis 50 Gew.-% vor, bezogen auf das Gesamtgewicht der polymerisierbaren Zusammensetzung.

Der einwertige Alkohol wird aus einem Alkanol, Cycloalkanol, Arylalkohol, Monoalkylether von Polyoxyalkylenglycolen oder Monoalkylether von Alkylenglycolen oder deren Gemischen ausgewählt.

Bevorzugt weist der einwertige Alkohol die allgemeine Struktur R-(CH2)ₙ-OH auf, wobei n bevorzugt 1 bis 6, bevorzugter 1-2 ist. Beispiele für R sind Alkyl wie z.B. C₁-C₁₀-Alkyl, Cycloalkyl wie z.B. Cyclohexyl, Aryl, Alkoxyl wie O-C₁-C₆-Alkyl, oder auch -O-(CH₂-CH₂-O)₁₋₄-O-C₁₋₆-Alkyl, -O-(CH₂- CH₂- CH₂-O)₁₋₄-O-C₁₋₆-Alkyl, bzw. -O-(CH₂- CH(CH₃)-O)₁₋₄-O-C₁₋₆-Alkyl oder beliebige Kombinationen dieser Reste R.

Beispielhaft können folgende geeignete Alkohole genannt werden: Ethylenglykolmonoalkylether, Diethylenglykolmonoalkylether, Ethylenglykolmonoarylether, Diethylenglykolmonoarylether oder Gemischen davon. Beispielhaft können in diesem Zusammenhang Diethylenglykolmonoethylether, Ethylenglykolmonophenylether und Diethylenglykolmonobutylether, oder beliebige Gemische Alkyl, bzw. -O-(CH₂- CH(CH₃)-O)₁₋₄-O-C₁₋₆-Alkyl oder beliebige Kombinationen dieser Reste R.

### Beispielhaft können folgende geeignete Alkohole genannt werden:

Ethylenglykolmonoalkylether, Diethylenglykolmonoalkylether, Ethylenglykolmonoarylether, Diethylenglykolmonoarylether oder Gemischen davon. Beispielhaft können in diesem Zusammenhang Diethylenglykolmonoethylether, Ethylenglykolmonophenylether und Diethylenglykolmonobutylether, oder beliebige Gemische davon genannt werden. Weitere beispielhafte Alkohole umfassen n-Hexanol, n-Octanol, Methoxybutanol, Ethylenglycolmonobutylether, Benzylalkohol, TCD-Alkohol M [8-Hydroxymethyl-tricyclo (5.2.1.0/2.6) decan], Cyclohexylmethanol, 2-Cyclohexylethanol, 4-Methoxybenzylalkohol, Hydroxyethylsalicylat.

Durch die chemische Struktur des Alkohols können auch der Erweichungsbereich und die Löslichkeit des thermoplastischen Oligomers bzw. niedermolekularen Polymers, das aus der polymerisierbaren Zusammensetzung erhalten wird, beeinflusst werden.

So werden mit längerkettigen Monoglycolethern Polymere mit niedriger Erweichung erhalten. Alkohole mit aromatischen bzw. mit cycloaliphatischen Strukturen ergeben dagegen Polymere mit höherer Erweichung.

Die Wasserlöslichkeit der Alkoholkomponente hat einen Einfluss auf die Beständigkeit der ausgehärteten Zusammensetzung gegenüber wässrigen Bearbeitungsmedien bei der späteren Optikbearbeitung. Z. B. ist Diethylenglycolmonoethylether bei 20°C mit Wasser mischbar, Ethylenglykolmonophenylether hat eine Wasserlöslichkeit von 10g/l (20°C), Benzylalkohol hat eine Wasserlöslichkeit von 40g/l (20°C) und TCD - Alkohol M (8-Hydroxymethyl-tricyclo (5.2.1.0/2.6) decan) hat eine Wasserlöslichkeit von <1g/l (20°C). Bei längeren Bearbeitungszeiten von optischen Bauelementen, z. B. im Bereich der Lithographieoptik, kann es vorteilhaft sein, hydrophobere Alkohole wie Ethylenglykolmonophenylether, Benzylalkohol oder TCD-Alkohol M zu verwenden, da dies die Wasseradsorption und somit ein unerwünschtes Aufquellen des Klebstoffs minimiert.

Für spezielle Anwendungen wie z. B. im Bereich der Lithographieoptik kann es daher bevorzugt sein, wenn in der polymerisierbaren Zusammensetzung ausschließlich solche einwertigen Alkohole vorliegen, deren Wasserlöslichkeit 50 g/l (20°C) oder weniger, bevorzugter 40 g/l (20°C) oder weniger, noch bevorzugter 20 g/l (20°C) oder weniger, oder sogar noch bevorzugter 1 g/l (20°C) oder weniger beträgt. Beispielhaft können in diesem Zusammenhang Benzylalkohol, Ethylenglycolmonophenylether oder TCD-Alkohol M oder beliebige Gemische dieser Alkohole genannt werden.

Bevorzugt liegt der einwertige Alkohol in einer Menge von 10 bis 60 Gew.-%, bevorzugter 15 bis 50 Gew.-%, noch bevorzugter 20 bis 40 Gew.-% vor, bezogen auf das Gesamtgewicht der polymerisierbaren Zusammensetzung.

In einer bevorzugten Ausführungsform der vorliegenden Erfindung wird ein Aryloniumsalz und/oder ein Ferroceniumsalz als Photopolymerisationsstarter verwendet. Aryloniumsalze werden bevorzugt für die Anregung im UVA-Bereich bei 350 bis 400 nm verwendet. Ferroceniumsalze werden bevorzugt bei einer Anregung durch blaues Licht bei 400 bis 450 nm verwendet.

Bevorzugt handelt es sich bei dem Aryloniumsalz um ein Arylsulfoniumsalz. In einer bevorzugten Ausführungsform wird der Photopolymerisationsstarter aus Arylsulfonium-hexafluoroantimonat, Arylsulfoniumhexafluorophosphat oder Gemischen davon ausgewählt. Arylsulfoniumhexafluoroantimonat ist z. B. als Cyracure UVI 6976 von Dow Chemical-Union Carbide erhältlich.

Arylsulfoniumhexafluorophosphat ist z. B. als Cyracure UVI 6992 von Dow Chemical-Union Carbide erhältlich. Arylsulfoniunsalze werden üblicherweise als Lösungen eiggesetzt, z. B. ca. 50% in Propylencarbonat.

Bei der Verwendung eines Ferroceniumsalzes wird dieses bevorzugt zusammen mit Cumol-hydroperoxid als Coinitiator eingesetzt. Ein geeignetes Ferroceniumsalz ist z. B. Irgacure 261 , erhältlich von Ciba.

Bevorzugt liegt der Photopolymerisationsstarter in einer Menge von 1,5 bis 10 Gew.-%, bevorzugter 2 bis 8 Gew.-%, noch bevorzugter 3 bis 6 Gew.-% vor, bezogen auf das Gesamtgewicht der polymerisierbaren Zusammensetzung. Wird ein Aryloniumsalz wie z. B. Arylsulfoniumhexafluoroantimonat, Arylsulfoniumhexafluorophosphat verwendet, so liegt dieses bevorzugt in einer Menge von 3 bis 6 Gew.-% vor, bezogen auf das Gesamtgewicht der polymerisierbaren Zusammensetzung.

In einer bevorzugten Ausführungsform beträgt das molare Verhältnis der Epoxidgruppen des cycloaliphatischen Epoxids zu den Hydroxylgruppen des einwertigen Alkohols 1,0 : 1,0 bis 4,0 : 1,0, bevorzugter 1,0 : 1,0 bis 3,0 : 1,0, noch bevorzugter 1,2 : 1,0 bis 2,6 : 1,0.

Bevorzugt liegt die Hydroxylfunktionalität aller organischen Verbindungen der polymerisierbaren Zusammensetzung mit OH-Gruppe(n) im Bereich von 1,0 bis 1,1. Noch bevorzugter beträgt die Hydroxylfunktionalität aller organischen Verbindungen der polymerisierbaren Zusammensetzung mit OH-Gruppe(n) 1,0, d.h. die polymerisierbare Zusammensetzung enthält nur einwertige Alkohole, jedoch keine Polyole.

In einer bevorzugten Ausführungsform umfasst die polymerisierbare Zusammensetzung ein Naturharz und/oder ein Kunstharz. Durch deren Anwesenheit können Erweichungsverhalten und/oder Löslichkeit des nach der Polymerisation erhaltenen thermoplastischen Oligomers bzw. Polymers beeinflusst werden. Entsprechend können auch Festweichmacher zugesetzt werden.

Bevorzugt weist das Harz keine Protonen bindenden funktionellen Gruppen auf. Noch bevorzugter weist das Harz keine Amin-, Amid-, Nitril-, Isocyanat-, Nitro-, oder Carbonylgruppen auf. Diese Strukturen blockieren das Arylsulfoniumsalz und inhibieren somit die kationische UV-Polymerisation.

Beispiele für geeignete Harze umfassen:
- Kunstharz CA, Ketonharz (Hüls AG),
- Kunstharz SK, Ketonharz hydriert (Hüls AG),
- Laropoal A81, Aldehydharz (BASF),
- Hydrogral, hydriertes Kolophonium (DRT),
- Dertoline P2L, Kolophonium-Pentaerythrolester (DRT).

Beispiele für Festweichmacher umfassen:
- Dicyclohexylphthalat, Schmelzpunkt: ca.64°C,
- Glycerintribenzoat, Schmelzpunkt: ca.71°C,
- Neopentylglycoldibenzoat, Schmelzpunkt: ca.49°C,
- 1,4-Cyclohexandimethanoldibenzoat, Schmelzpunkt: ca.118°C.

Das Harz kann aus hydriertem Ketonharz, hydriertem Kolophonium oder Gemischen davon ausgewählt werden. Als Beispiel für ein hydriertes Ketonharz kann Kunstharz SK, Hersteller Degussa-Hüls, genannt werden. Als Beispiel für hydriertes Kolophonium kann Hydrogral, Hersteller DRT&SEEG (Willers, Engel & Co.), genannt werden.

In einer bevorzugten Ausführungsform umfasst die polymerisierbare Zusammensetzung einen Füllstoff. Der Zusatz von Füllstoffen verbessert die Steifigkeit des nach der Polymerisation erhaltenen thermoplastischen Oligomers bzw. Polymers und reduziert den linearen Ausdehnungskoeffizienten. Bevorzugt ist darauf zu achten, dass die eingearbeiteten Füllstoffe eine ausreichende optische Transparenz im Anregungsbereich des Photopolymerisationsstarters aufweisen.

Bevorzugt wird der Füllstoff aus Quarz, insbesondere Quarzmehl, Glasperlen und Glasfasern ausgewählt.

In einer bevorzugten Ausführungsform ist die Oberfläche des Füllstoffs hydrophobisiert, bevorzugt durch eine Oberflächenbehandlung mit Silanen, insbesondere mit Epoxidsilanen und/oder Alkylsilanen.

Zur Erzielung einer bestimmten Konsistenz der polymerisierbaren Zusammensetzung kann in die Formulierung hochdisperse Kieselsäure eingearbeitet werden. Dadurch ist es möglich, die polymerisierbare Zusammensetzung auch auf schräge bzw. senkrechte Flächen von Optikträgern (z. B. Ringschneiden) aufzubringen, ohne dass diese vor der Lichthärtung weglaufen kann. Typischerweise wird hochdisperse Kieselsäure in Konzentrationen von 2-8 Gew.%, bezogen auf das Gesamtgewicht, zugegeben.

Die polymerisierbare Zusammensetzung kann in einer bevorzugten Ausführungsform einen Farbstoff umfassen, bevorzugt einen Farbstoff mit einem geringen Absorptionskoeffizienten im Bereich von 360 nm bis 380 nm. Der Farbstoff dient primär dazu, dass der Hilfskitt während des Kittvorgangs besser erkennbar ist und damit bei flächigen Kittungen störende Luftblasen vermieden werden. Der Farbstoff liegt bevorzugt in einer Konzentration von maximal 0,1 Gew.-%, bevorzugter maximal 0,05 Gew.-% vor, bezogen auf das Gesamtgewicht der polymerisierbaren Zusammensetzung. Ein bevorzugter Farbstoff ist Sudanblau, z. B. in einer Konzentration von maximal 0,05 Gew.-%, bezogen auf das Gesamtgewicht der polymerisierbaren Zusammensetzung. Bei der Verwendung von Sudanblau als Farbstoff ändert sich dessen Farbe während der Polymerisation bzw. Härtungsreaktion der polymerisierbaren Zusammensetzung von blau nach schwach rotbraun. Diese Eigenschaft kann als Härtungsindikator verwendet werden.

Gemäß eines weiteren Aspekts der vorliegenden Erfindung wird eine Zusammensetzung bereitgestellt, umfassend ein thermoplastisches Oligomer oder Polymer und erhältlich durch Oligomerisation oder Polymerisation der oben definierten polymerisierbaren Zusammensetzung, wobei das thermoplastische Oligomer oder Polymer einen Erweichungspunkt, gemessen nach der Ring-und-Kugel-Methode, im Bereich von 35 °C bis 90 °C aufweist.

Der Begriff "thermoplastisch" wird im Rahmen der vorliegenden Erfindung in seiner üblichen Weise verwendet und bezieht sich auf solche Oligomere und Polymere, die sich unter Wärmeeinfluss reversibel plastisch verformen lassen.

Wie bereits oben erwähnt wurde, weist das thermoplastische Oligomer oder thermoplastische Polymer einerseits eine ausreichende Adhäsionswirkung für eine gute Fixierung eines optischen Elements auf und besitzt andererseits eine ausreichende Löslichkeit in polaren Lösungsmitteln für eine leichte Ablösung am Ende der Bearbeitung und leichte Reinigung der Optikteile. Aufgrund des thermoplastischen Verhaltens können Optikkomponenten auch durch definierten Wärmeeintrag leicht und schnell von den Haltevorrichtungen getrennt werden.

Dass die Bildung eines duroplastischen Kunststoffs vermieden und die Polymerisierungs- bzw. Härtungsreaktion der oben definierten polymerisierbaren Zusammensetzung zur Bildung von thermoplastischen Oligomeren bzw. niedermolekularen Polymeren führt, drückt sich in deren Erweichungspunkt aus. Dieser wird nach der Ring-und-Kugel-Methode bestimmt. Das Messverfahren basiert auf der DIN ISO 4625, wobei in Abweichung von dieser Norm der Ring nur 2,5-3 mm hoch mit UV-Hilfskleber gefüllt wird. Der Ring liegt mit dem kleineren Durchmesser auf einem Objektträger, der zuvor mit einem Silicontrennmittel behandelt worden ist. Der eingefüllte Hilfskleber wird mit UVA-Licht, Intensität 40 mW/cm², 2-mal 120 Sek. (von oben bzw. von unten) ausgehärtet. Nach einer Liegezeit von 1 Stunde wird der Objektträger entfernt und der Ring in die Prüfapparatur zur Messung eingesetzt.

In einer bevorzugten Ausführungsform weist das thermoplastische Oligomer oder Polymer einen Erweichungspunkt, gemessen nach der Ring-und-Kugel-Methode, im Bereich von 40 °C bis 80 °C, noch bevorzugter 40 °C bis 70 °C auf.

Gemäß eines weiteren Aspekts der vorliegenden Erfindung wird ein Verfahren zur Herstellung eines thermoplastischen Oligomers oder Polymers bereitgestellt, umfassend folgende Schritte:
- die Bereitstellung der oben definierten polymerisierbaren Zusammensetzung,
- Bestrahlung der polymerisierbaren Zusammensetzung über einen Zeitraum, so dass ein thermoplastisches Oligomer oder ein thermoplastisches Polymer, bevorzugt ein thermoplastisches niedermolekulares Polymer, erhalten wird.

Typische Bestrahlungsbedingungen bei lichthärtenden Epoxy-Klebern sind z. B. folgende:
- Typische Intensitäten: 10 bis 200 mW/cm² (abhängig von der Applikation), bevorzugte Intensitäten: 20 bis 50 mW/cm².
- Bestrahlungsdauer: 30 s bis 300 s (abhängig von der Applikation), bevorzugter 60 s bis 200 s
- Erwärmung während der Lichthärtung ist grundsätzlich möglich (max. 80°C), beschleunigt auch entsprechend die Polymerisation, sollte aber bei Optik aus Gründen der Verspannung möglichst vermieden werden.
- Bei verspannungsempfindlichen Teilen kann die Belichtung auch "gepulst" erfolgen, d.h. durch entsprechende Programmierung des Bestrahlungsgeräts wechseln sich, gesteuert durch ein Blendensystem, Belichtungsphasen mit Dunkelphasen ab (Beispiel: Bluepoint 4, Dr. Hönle AG).

Bevorzugt wird die Bestrahlungsdauer so gewählt, dass das thermoplastische Oligomer oder Polymer einen Erweichungspunkt, gemessen nach der Ring-und-Kugel-Methode, im Bereich von 35 °C bis 90 °C, bevorzugter 40°C bis 80°C, noch bevorzugter 40°C bis 70°C aufweist.

In einer bevorzugten Ausführungsform erfolgt die Bestrahlung der polymerisierbaren Zusammensetzung im Bereich von 280 nm bis 450 nm, bevorzugter 350 nm bis 450 nm. Bei der Verwendung eines Aryloniumsalzes als Photoinitiator erfolgt die Bestrahlung bevorzugt im Bereich von 350 nm bis 400 nm. Bei der Verwendung eines Ferroceniumsalzes als Photoinitiator, gegebenenfalls in Kombination mit Cumolhydroperoxid als Coinitiator, erfolgt die Bestrahlung bevorzugt im Bereich von 400 nm bis 450 nm.

Die Bestrahlung kann mit bekannten Strahlungsquellen, wie sie üblicherweise im Bereich der Photopolymerisation zum Einsatz kommen, durchgeführt werden. Beispielhaft kann ein Bluepoint 2 bzw. Bluepoint 3, Hersteller Dr. Hönle AG, genannt werden.

Als Strahlungsquellen bewährt haben sich Quecksilberbogenlampen. Neben reinen Quecksilberstrahlern werden auch mit Metallhalogeniden dotierte Quecksilberstrahler eingesetzt. So sind Eisenhalogenid dotierte Quecksilberstrahler besonders geeignet für Photoinitiatoren, die im UVA-Bereich angeregt werden (ca. 340-400mn). Für die Anregung im blauen Wellenlängenbereich (ca. 400-450nm) sind dagegen Quecksilberstrahler, die mit Galliumhalogenid dotiert sind, geeigneter. Moderne Bestrahlungsgeräte sind mit Filtern ausgerüstet, die unerwünschte Wellenlängenbereiche (UVC-Strahlung, langwellige Wärmestrahlung) unterdrücken. Dadurch ist es möglich, lichthärtende Klebstoffe spannungsarm auszuhärten. Die Bestrahlung der Klebestellen selbst erfolgt üblicherweise durch Punktstrahler (über Lichtleiter) bzw. durch Flächenstrahler. Alternativ zu Quecksilberstrahlern werden neuerdings auch energiereiche Leuchtdioden (LED) angeboten, die bei definierten Wellenlängen (365 nm, 395 nm, 405 nm, 455 nm) Licht emittieren. (Panacol - Elosol GmbH, Dr. Hönle AG).

Gemäß eines weiteren Aspekts betrifft die vorliegende Erfindung ein Verfahren zum Fixieren bzw. Blocken eines optischen Bauelements auf einem Halteelement, umfassend folgende Schritte:
- Aufbringen der oben definierten polymerisierbaren Zusammensetzung auf dem optischen Bauelement und/oder dem Halteelement,
- in Kontakt bringen des optischen Bauelements mit dem Halteelement und
- Bestrahlung der polymerisierbaren Zusammensetzung über einen Zeitraum, so dass ein thermoplastisches Oligomer oder thermoplastisches Polymer, insbesondere ein niedermolekulares thermoplastisches Polymer, erhalten wird.

Nach dem in Kontakt bringen von optischem Bauelement und Halteelement kann optional ein Justieren des optischen Bauelements erfolgen.

Bevorzugt wird das optische Bauelement für die Dauer der Bearbeitung stabil fixiert. Bevorzugt handelt es sich bei dem optischen Bauelement um eine Linse, z. B. ein Brillenglashalbfabrikat. Weitere optische Bauelemente umfassen Planoptik (z. B. Scheiben, Prismen), lichtdurchlässige Trägerelemente bzw. Stützelemente, auf die die Optik bzw. Keramik für die Dauer der Bearbeitung fixiert wird.

Das thermoplastische Oligomer bzw. Polymer vermittelt eine ausreichende Adhäsion zwischen Halteelement und optischem Bauelement, so dass das optische Bauelement auch während seiner Bearbeitung in der entsprechenden Position fixiert bleibt. Nach der Bearbeitung kann der Verbund mit dem thermoplastischen Oligomer bzw. Polymer problemlos durch Einwirkung polarer Lösungsmittel wie z. B. Aceton entfernt bzw. durch Einwirkung von Wärme getrennt werden.

Bezüglich der weiteren Eigenschaften des thermoplastischen Oligomers bzw. Polymers wie z. B. Erweichungspunkt wird auf die obigen Ausführungen verwiesen.

Bezüglich der geeigneten Bestrahlungsbedingungen wie Dauer, Intensität oder Strahlungsquelle wird auf die obigen Ausführungen verwiesen.

Gemäß eines weiteren Aspekts betrifft die vorliegende Erfindung die Verwendung der oben definierten polymerisierbaren Zusammensetzung zur Herstellung eines thermoplastischen Klebstoffs. Dieser Klebstoff umfasst das oben definierte thermoplastische Oligomer bzw. Polymer.

Gemäß eines weiteren Aspekts betrifft die vorliegende Erfindung die Verwendung der oben definierten polymerisierbaren Zusammensetzung zum Fixieren bzw. Blocken oder Kleben von optischen Bauelementen, z. B. Linsen, insbesondere Brillenglashalbfabrikaten, oder zum Kitten von optischen Bauelementen, z. B. von Linsen bzw. von Planoptik.
Wie bereits oben diskutiert, kann es bei längeren Bearbeitungszeiten des optischen Bauelements, z. B. bei länger andauernden Polierprozessen, vorteilhaft sein, wenn ein hydrophober einwertiger Alkohol in der polymerisierbaren Zusammensetzung vorliegt, da dann ein unerwünschtes Aufquellen des gehärteten Klebstoffs durch Wasseraufnahme möglichst gering gehalten wird. Wird daher die oben definierte polymerisierbare Zusammensetzung zum Blocken oder Kleben im Bereich der Lithographieoptik eingesetzt, ist es bevorzugt, wenn sie ausschließlich einwertige Alkohole mit einer Wasserlöslichkeit von 50 g/l (20°C) oder weniger, bevorzugter 40 g/l (20°C), noch bevorzugter 20 g/l (20°C), oder sogar noch bevorzugter 1 g/l (20°C) oder weniger aufweist. Beispielhaft können in diesem Zusammenhang Benzylalkohol, Ethylenglycolmonophenylether oder TCD-Alkohol M oder beliebige Gemische dieser Alkohole genannt werden.

Gemäß eines weiteren Aspekts betrifft die vorliegende Erfindung die Verwendung der oben definierten polymerisierbaren Zusammensetzung zum Aufbringen einer Schutzschicht oder Schutzlackierung auf der Oberfläche eines optischen Bauelements. Bei diesem optischen Bauelement kann es sich z. B. um eine Linse oder um Planoptik handeln. Die Schutzschicht bzw. Schutzlackierung schützt die bereits fertig polierten optischen Flächen vor Beschädigung.

Gemäß eines weiteren Aspekts betrifft die vorliegende Erfindung ein Verfahren zum Aufbringen einer Schutzschicht oder Schutzlackierung auf ein optisches Bauelement, umfassend folgende Schritte:
- Aufbringen der oben definierten polymerisierbaren Zusammensetzung auf der Oberfläche eines optischen Bauelements in Form einer Schicht oder eines Films,
- Bestrahlung der polymerisierbaren Zusammensetzung über einen Zeitraum, so dass ein thermoplastisches Oligomer oder ein thermoplastisches Polymer, insbesondere ein niedermolekulares thermoplastisches Polymer, erhalten wird.

Bei dem optischen Bauelement kann es sich um eine Linse, z. B. eine Brillenlinse, handeln. Es werden aber auch Bauelemente während der Bearbeitung mit einer Schutzschicht versehen, die keine ursprünglich optischen Komponenten darstellen, z. B. die Waferstages aus Zerodur in Lithographiesystemen.

Bezüglich der Eigenschaften des thermoplastischen Oligomers/Polymers kann auf die obigen Ausführungen verwiesen werden, d.h. bevorzugt wird die Bestrahlungsdauer so gewählt, dass das thermoplastische Oligomer oder Polymer einen Erweichungspunkt, gemessen nach der Ring-und-Kugel-Methode, im Bereich von 35 °C bis 90 °C, bevorzugter 40°C bis 80°C, noch bevorzugter 40°C bis 70°C aufweist.

Bezüglich der geeigneten Bestrahlungsbedingungen wie Dauer, Intensität oder Strahlungsquelle kann ebenfalls auf die obigen Ausführungen verwiesen werden. In einer bevorzugten Ausführungsform des Verfahrens wird die polymerisierbare Zusammensetzung mit einem Lösungsmittel, das sich an der Photopolymerisation chemisch nicht beteiligen kann, verdünnt und anschließend auf die Oberfläche des optischen Bauelements aufgebracht. Bevorzugt erfolgt das Aufbringen durch Spritzlackieren, Aufpinseln oder durch Eintauchen des optischen Elements in die Lösung der polymerisierbaren Zusammensetzung.

Bevorzugt wird das Lösungsmittel aus aromatischen Kohlenwasserstoffen, insbesondere Xylol oder Ethylbenzol, aus Ethern, insbesondere Tetrahydrofuran oder Dioxan, aus Estern, insbesondere Ethylacetat oder Butylacetat, aus Ketonen, insbesondere Methylethylketon oder Methylisobutylketon, oder Gemischen davon ausgewählt. Bevorzugt lässt man das Lösungsmittel vor dem Belichtungsschritt verdunsten. Dies wird auch als Ablüften bezeichnet.

Gemäß eines weiteren Aspekts betrifft die vorliegende Erfindung ein optisches Bauelement, insbesondere eine Linse, mit einer Oberflächenbeschichtung, die die oben definierte Zusammensetzung mit einem thermoplastischen Oligomer oder thermoplastischen Polymer, insbesondere thermoplastischen niedermolekularen Polymer, enthält.

Bezüglich der weiteren Eigenschaften des thermoplastischen Oligomers bzw. Polymers wie z. B. Erweichungspunkt wird auf die obigen Ausführungen verwiesen.

Die Erfindung wird nun durch die nachfolgenden Beispiele eingehender erläutert.

### BEISPIELE

### Beispiel 1

| | |
|---|---|
| 100 Gew.-Teile | 3,4-Epoxycyclohexylmethyl-3,4-epoxycyclohexan-carboxylat (Cyracure Resin UVR-6110 von Dow Chemical) |
| 80 Gew.-Teile | hydriertes Ketonharz (Kunstharz SK von Degussa-Hüls) |
| 25 Gew.-Teile | Diethylenglycolmonoethylether |
| 30 Gew.-Teile | Ethylenglykolmonophenylether |
| 12 Gew.-Teile | Arylsulfoniumhexafluoroantimonat (Cyracure UVI 6974 von Dow Chemical-Union Carbide) |
| 0,02 Gew.-Teile | Sudanblau |

Molares Verhältnis von Epoxy : Hydroxy = 1,83 : 1

Erweichungstemperatur: ca. 45°C

Aushärtung: Bluepoint 2, Quecksilberstrahler, Intensität ca. 40 mW/cm², Dauer 120 sec.

### Beispiel 2

| | |
|---|---|
| 100 Gew.-Teile | 3,4-Epoxycyclohexylmethyl-3,4-epoxycyclohexan-carboxylat (Cyracure Resin UVR-6110 von Dow Chemical) |
| 50 Gew.-Teile | hydriertes Ketonharz (Kunstharz SK von Degussa-Hüls) |
| 30 Gew.-Teile | Diethylenglycolmonoethylether |
| 20 Gew.-Teile | TCD-Alkohol M [8-Hydroxymethyl-tricyclo (5.2.1.0/2.6) decan] |
| 12 Gew.-Teile | Arylsulfoniumhexafluoroantimonat (Cyracure UVI 6974 von Dow Chemical-Union Carbide) |
| 0,02 Gew.-Teile | Sudanblau |

Molares Verhältnis von Epoxy : Hydroxy = 2,15 : 1

Erweichungstemperatur: ca. 50°C

Aushärtung: Bluepoint 2, Quecksilberstrahler, Intensität ca. 40 mW/cm², Dauer 120 sec

### Beispiel 3

| | |
|---|---|
| 100 Gew.-Teile | 3,4-Epoxycyclohexylmethyl-3,4-epoxycyclohexan-carboxylat (Cyracure Resin UVR-6110 von Dow Chemical) |
| 50 Gew.-Teile | hydriertes Kolophonium (Hydrogral) |
| 25 Gew.-Teile | Diethylenglycolmonobutylether |
| 25 Gew.-Teile | Ethylenglykolmonophenylether |
| 12 Gew.-Teile | Arylsulfoniumhexafluoroantimonat (Cyracure UVI 6974 von Dow Chemical-Union Carbide) |
| 0,02 Gew.-Teile | Sudanblau |

Molares Verhältnis von Epoxy : Hydroxy = 2,21 : 1

Erweichungstemperatur: ca. 55°C

Aushärtung: Bluepoint 2, Quecksilberstrahler, Intensität ca. 40 mW/cm², Dauer 120 sec

### Beispiel 4

| | |
|---|---|
| 100 Gew.-Teile | 3,4-Epoxycyclohexylmethyl-3,4-epoxycyclohexan-carboxylat (Cyracure Resin UVR-6110 von Dow Chemical) |
| 60 Gew.-Teile | hydriertes Ketonharz (Kunstharz SK) |
| 60 Gew.-Teile | Benzylalkohol |
| 0,05 Gew.-Teile | Sudanblau |
| 8 Gew.-Teile | Arylsulfoniumhexafluoroantimonat (Cyracure UVI 6974 von Dow Chemical-Union Carbide) |
| 12 Gew.-Teile | hochdisperse Kieselsäure (Verdicker) |

Molares Verhältnis von Epoxy : Hydroxy = 1,33 : 1

Erweichungstemperatur: ca. 35°C

Aushärtung: Bluepoint 2, Quecksilberstrahler, Intensität ca. 40 mW/cm², Dauer 120 sec

### Beispiel 5

| | |
|---|---|
| 90 Gew.-Teile | 3,4-Epoxycyclohexylmethyl-3,4-epoxycyclohexan-carboxylat (Cyracure Resin UVR-6110 von Dow Chemical) |
| 10 Gew.-Teile | Bis- (3,4-epoxycyclohexyl)-Adipat (Cyracure Resin UVR-6128 von Dow Chemical) |
| 80 Gew.-Teile | hydriertes Ketonharz (Kunstharz SK von Degussa-Hüls) |
| 30 Gew.-Teile | Diethylenglycolmonoethylether |
| 20 Gew.-Teile | Ethylenglykolmonophenylether |
| 15 Gew.-Teile | Arylsulfoniumhexafluoroantimonat (Cyracure UVI 6974 von Dow Chemical-Union Carbide) |
| 0,05 Gew.-Teile | Sudanblau |
| 10 Gew.-Teile | hochdisperse Kieselsäure (Verdicker) |

Molares Verhältnis von Epoxy : Hydroxy = 1,94 : 1

Erweichungstemperatur: ca. 50°C

Aushärtung: Bluepoint 2, Quecksilberstrahler, Intensität ca. 40 mW/cm², Dauer 120 sec

### Beispiel 6

| | |
|---|---|
| 100 Gew.-Teile | 3,4-Epoxycyclohexylmethyl-3,4-epoxycyclohexan-carboxylat (Cyracure Resin UVR-6110 von Dow Chemical) |
| 40 Gew.-Teile | hydriertes Ketonharz (Kunstharz SK) |
| 40 Gew.-Teile | Ethylenglykolmonophenylether |
| 12 Gew.-Teile | Arylsulfoniumhexafluoroantimonat (Cyracure UVI 6974 von Dow Chemical-Union Carbide) |
| 0,05 Gew.-Teile | Sudanblau |

Molares Verhältnis von Epoxy : Hydroxy = 2,56 : 1

Erweichungstemperatur: ca. 75°C

Aushärtung: Bluepoint 2, Quecksilberstrahler, Intensität ca. 40 mW/cm², Dauer 120 sec

### Beispiel 7

| | |
|---|---|
| 100 Gew.-Teile | 3,4-Epoxycyclohexylmethyl-3,4-epoxycyclohexan-carboxylat (Cyracure Resin UVR-6110 von Dow Chemical) |
| 70 Gew.-Teile | hydriertes Ketonharz (Kunstharz SK) |
| 120 Gew.-Teile | TCD-Alkohol M |
| 8 Gew.-Teile | Arylsulfoniumhexafluoroantimonat (Cyracure UVI 6974 von Dow Chemical-Union Carbide) |
| 0,05 Gew.-Teile | Sudanblau |
| 0,5 Gew.-Teile | Zonyl FSN (fluoriertes Netzmittel, DuPont) |

Molares Verhältnis von Epoxy : Hydroxy = 1,02 : 1

Erweichungstemperatur: ca. 45°C

Aushärtung: Bluepoint 2, Quecksilberstrahler, Intensität ca. 40 mW/cm², Dauer 120 sec

### Beispiel 8

| | |
|---|---|
| 100 Gew.-Teile | 3,4-Epoxycyclohexylmethyl-3,4-epoxycyclohexan-carboxylat (Cyracure Resin UVR-6110 von Dow Chemical) |
| 60 Gew.-Teile | hydriertes Ketonharz (Kunstharz SK) |
| 110 Gew.-Teile | TCD-Alkohol M |
| 30 Gew.-Teile | Glycerintribenzoat (Festweichmacher) |
| 10 Gew.-Teile | Arylsulfoniumhexafluoroantimonat (Cyracure UVI 6974 von Dow Chemical-Union Carbide) |
| 0,05 Gew.-Teile | Sudanblau |

Molares Verhältnis von Epoxy : Hydroxy = 1,12 : 1

Erweichungstemperatur: ca. 45°C

Aushärtung: Bluepoint 2, Quecksilberstrahler, Intensität ca. 40 mW/cm², Dauer 120 sec

### Beispiel 9

| | |
|---|---|
| 100 Gew.-Teile | Nanopox C620 (Nanoresin AG) 3,4-Epoxycyclohexylmethyl-3,4-epoxycyclohexan-carboxylat mit ca. 40% nano-SiO2 |
| 50 Gew.-Teile | hydriertes Ketonharz (Kunstharz SK) |
| 70 Gew.-Teile | TCD-Alkohol M |
| 10 Gew.-Teile | Arylsulfoniumhexafluoroantimonat (Cyracure UVI 6974 von Dow Chemical-Union Carbide) |
| 0,05 Gew.-Teile | Sudanblau |
| 250 Gew.-Teile | Quarzmehl silanisiert Silbond FW 12 EST (Quarzwerke GmbH) |

Molares Verhältnis von Epoxy : Hydroxy = 0,95: 1

Erweichungstemperatur: ca. 40°C

Aushärtung: Bluepoint 2, Quecksilberstrahler, Intensität ca. 40 mW/cm², Dauer 120 sec

Volumenschrumpfung ca. 1,0 Vol%

### Beispiel 10

| | |
|---|---|
| 100 Gew.-Teile | 3,4-Epoxycyclohexylmethyl-3,4-epoxycyclohexan-carboxylat (Cyracure Resin UVR-6110 von Dow Chemical) |
| 100 Gew.-Teile | hydriertes Ketonharz (Kunstharz SK von Degussa-Hüls) |
| 30 Gew.-Teile | Diethylenglycolmonoethylether |
| 80 Gew.-Teile | Xylol |
| 50 Gew.-Teile | Dioxan |
| 12 Gew.-Teile | Arylsulfoniumhexafluoroantimonat (Cyracure UVI 6976 von Dow Chemical-Union Carbide) |
| 0,05 Gew.-Teile | Sudanblau |

Molares Verhältnis von Epoxy : Hydroxy = 3,31 : 1

Erweichungstemperatur: ca. 60 °C

Aushärtung: Bluepoint 2, Quecksilberstrahler, Intensität ca. 40 mW/cm², Dauer 120 sec
(nach Ablüften)
Verwendung als Schutzlack

### Beispiel 11

| | |
|---|---|
| 100 Gew.-Teile | 3,4-Epoxycyclohexylmethyl-3,4-epoxycyclohexan-carboxylat (Cyracure Resin UVR-6110 von Dow Chemical) |
| 100 Gew.-Teile | hydriertes Ketonharz (Kunstharz SK von Degussa-Hüls) |
| 100 Gew.-Teile | TCD - Alkohol M |
| 180 Gew.-Teile | Methylethylketon |
| 20 Gew.-Teile | Methylisobutylketon |
| 10 Gew.-Teile | Arylsulfoniumhexafluoroantimonat (Cyracure UVI 6976 von Dow Chemical-Union Carbide) |
| 0,5 Gew.-Teile | Sudanblau |
| 1,0 Gew.-Teile | Zonyl FSN (fluoriertes Netzmittel) |

Molares Verhältnis von Epoxy : Hydroxy = 1,23 : 1

Erweichungstemperatur: ca. 70 °C

Aushärtung: Bluepoint 2, Quecksilberstrahler, Intensität ca. 40 mW/cm², Dauer 120 sec
(nach Ablüften)
Verwendung als Schutzlack

### Beispiel 12

| | |
|---|---|
| 100 Gew.-Teile | 3,4-Epoxycyclohexylmethyl-3,4-epoxycyclohexan-carboxylat (Cyracure Resin UVR-6110 von Dow Chemical) |
| 50 Gew.-Teile | Ketonharz (Kunstharz CA) |
| 30 Gew.-Teile | Cyclohexenoxid |
| 30 Gew.-Teile | Diethylenglycolmonoethylether |
| 10 Gew.-Teile | Arylsulfoniumhexafluoroantimonat (Cyracure UVI 6974 von Dow Chemical-Union Carbide) |
| 0,05 Gew.-Teile | Sudanblau |

Molares Verhältnis von Diepoxy : Monoepoxy = 2,07: 1

Molares Verhältnis von (Rest-) Diepoxy : Hydroxy = 1,97 : 1

Erweichungstemperatur: ca. 60°C

Viskosität bei 25°C: 137mm²/s (ungehärtet)

Aushärtung: Bluepoint 2, Quecksilberstrahler, Intensität ca. 40 mW/cm², Dauer 120 sec

Unter Berücksichtigung der obigen Ausführungen betrifft die vorliegende Erfindung insbesondere folgende Aspekte bzw. bevorzugten Ausführungsformen gemäß den nachfolgenden Absätzen {001} bis {025}:
{001} Eine polymerisierbare Zusammensetzung, umfassend
   - eine cycloaliphatische Epoxidverbindung,
   - einen einwertigen Alkohol,
   - einen Photopolymerisationsstarter,
   wobei das molare Verhältnis der Epoxidgruppen der cycloaliphatischen Epoxidverbindung zu den Hydroxylgruppen des einwertigen Alkohols 0,9 :1,0 bis 4,0 : 1,0 beträgt und
   die Hydroxylfunktionalität aller organischen Verbindungen der polymerisierbaren Zusammensetzung mit OH-Gruppe(n) im Bereich von 1,0 bis 1,25 liegt.
{002} Polymerisierbare Zusammensetzung nach Absatz {001}, wobei die cycloaliphatische Epoxidverbindung ein Monoepoxid, ein Diepoxid, oder ein Gemisch davon ist.
{003} Polymerisierbare Zusammensetzung nach Absatz {001} oder {002}, wobei die cycloaliphatische Epoxidverbindung aus 3,4-Epoxycyclohexylmethyl-3,4-epoxycyclohexan-carboxylat, Bis-(3,4-epoxycyclohexylmethyl)-adipat, 2-(3,4-epoxycyclohexyl-5,5-spiro-3,4-epoxy)-cyclohexan-1,3-dioxan, Cyclohexenoxid, Vinylcyclohexendioxid, Vinylcyclohexenmonoxid oder deren Gemischen ausgewählt wird.
{004} Polymerisierbare Zusammensetzung nach einem der Absätze {001} bis {003}, wobei der einwertige Alkohol aus Alkanolen, Cycloalkanolen, Arylalkoholen, Monoalkylethern von Polyoxyalkylenglycolen oder Monoalkylethern von Alkylenglycolen oder deren Gemischen ausgewählt wird.
{005} Polymerisierbare Zusammensetzung nach einem der Absätze {001} bis {004}, wobei der Photopolymerisationsstarter ein Aryloniumsalz und/oder ein Ferroceniumsalz ist.
{006} Polymerisierbare Zusammensetzung nach Absatz {005}, wobei der Photopolymerisationsstarter aus Arylsulfoniumhexafluoroantimonat, Arylsulfoniumhexafluorophosphat, oder Gemischen davon ausgewählt wird.
{007} Polymerisierbare Zusammensetzung nach einem der Absätze {001} bis {006}, wobei das molare Verhältnis der Epoxidgruppen der cycloaliphatischen Epoxidverbindung zu den Hydroxylgruppen des einwertigen Alkohols 1,0:1,0 bis 4,0:1,0 beträgt.
{008} Polymerisierbare Zusammensetzung nach einem der Absätze {001} bis {007}, wobei die Hydroxylfunktionalität aller organischen Verbindungen der polymerisierbaren Zusammensetzung mit OH-Gruppe(n) 1,0 beträgt.
{009} Polymerisierbare Zusammensetzung nach einem der Absätze {001} bis {008}, weiterhin umfassend ein Naturharz und/oder ein Kunstharz und/oder einen Festweichmacher.
{010} Polymerisierbare Zusammensetzung nach einem der Absätze {001} bis {009}, weiterhin umfassend einen Füllstoff, ausgewählt aus der Gruppe bestehend aus Quarz, Glasperlen, Glasfasern und Gemischen davon.
{011} Polymerisierbare Zusammensetzung nach einem der Absätze {001} bis {010}, weiterhin umfassend hochdisperse Kieselsäure als Konsistenzgeber.
{012} Polymerisierbare Zusammensetzung nach einem der Absätze {001} bis {011}, weiterhin umfassend einen Farbstoff.
{013} Zusammensetzung, umfassend ein thermoplastisches Oligomer oder Polymer und erhältlich durch Oligomerisation oder Polymerisation der polymerisierbaren Zusammensetzung gemäß einem der Absätze {001} bis {012}, wobei das thermoplastische Oligomer oder Polymer einen Erweichungspunkt, gemessen nach der Ring-und-Kugel-Methode, im Bereich von 35 °C bis 90 °C aufweist.
{014} Zusammensetzung nach Absatz {013}, wobei der Erweichungspunkt im Bereich von 40°C bis 80°C liegt.
{015} Verfahren zur Herstellung eines thermoplastischen Oligomers oder Polymers, umfassend
   - die Bereitstellung der polymerisierbaren Zusammensetzung nach einem der Absätze {001} bis {012},
   - Bestrahlung der polymerisierbaren Zusammensetzung über einen Zeitraum, so dass ein thermoplastisches Oligomer oder Polymer erhalten wird.
{016} Verfahren nach Absatz {015}, wobei die Bestrahlungsdauer so gewählt wird, dass das thermoplastische Oligomer oder Polymer einen Erweichungspunkt, gemessen nach der Ring-und-Kugel-Methode, im Bereich von 35 °C bis 90 °C aufweist.
{017} Verfahren nach Absatz {015} oder {016}, wobei die Bestrahlungsdauer 30 Sekunden bis 300 Sekunden beträgt.
{018} Verfahren nach einem der Absätze {015} bis {017}, wobei die Bestrahlung der polymerisierbaren Zusammensetzung im Bereich von 280 nm bis 450 nm erfolgt.
{019} Verfahren zum Fixieren oder Blocken eines optischen Bauelements auf einem Halteelement, umfassend folgende Schritte:
   - Aufbringen der polymerisierbaren Zusammensetzung gemäß einem der Absätze {001} bis {012} auf dem optischen Bauelement und/oder dem Halteelement,
   - in Kontakt bringen des optischen Bauelements mit dem Halteelement und
   - Bestrahlung der polymerisierbaren Zusammensetzung über einen Zeitraum, so dass ein thermoplastisches Oligomer oder Polymer erhalten wird.
{020} Verwendung der polymerisierbaren Zusammensetzung nach einem der Absätze {001} bis {012} zur Herstellung eines thermoplastischen Klebstoffs.
{021} Verwendung nach Absatz {020} zum Fixieren, Blocken, Kleben oder Kitten von Linsen oder von Planoptik.
{022} Verwendung der polymerisierbaren Zusammensetzung nach einem der Absätze {001} bis {012} zum Aufbringen einer Schutzschicht oder Schutzlackierung auf der Oberfläche eines optischen Bauelements.
{023} Verfahren zur Aufbringung einer Schutzschicht oder Schutzlackierung auf ein optisches Bauelement, umfassend
   - Aufbringen der polymerisierbaren Zusammensetzung nach einem der Absätze {001} bis {012} auf der Oberfläche eines optischen Bauelements in Form einer Schicht oder eines Films,
   - Bestrahlung der polymerisierbaren Zusammensetzung über einen Zeitraum, so dass ein thermoplastisches Oligomer oder Polymer erhalten wird.
{024} Verfahren nach Absatz {023}, wobei die polymerisierbare Zusammensetzung mit einem Lösungsmittel verdünnt und anschließend auf die Oberfläche des optischen Bauelements aufgebracht wird.
{025} Optisches Bauelement mit einer Oberflächenbeschichtung, die eine Zusammensetzung nach einem der Absätze {013} bis {014} aufweist.

## Patentansprüche

1. Polymerisierbare Zusammensetzung, umfassend
- eine cycloaliphatische Epoxidverbindung,
- einen einwertigen Alkohol,
- einen Photopolymerisationsstarter,
wobei das molare Verhältnis der Epoxidgruppen der cycloaliphatischen Epoxidverbindung zu den Hydroxylgruppen des einwertigen Alkohols 0,9 :1,0 bis 4,0 :1,0 beträgt und
die Hydroxylfunktionalität aller organischen Verbindungen der polymerisierbaren Zusammensetzung mit OH-Gruppe(n) im Bereich von 1,0 bis 1,25 liegt, und der einwertige Alkohol aus Alkanolen, Cyclosalkanolen, Arylalkoholen, Monoalkylethern von Polyoxyalkylenglycolen oder Monoalkylethern von Alkylenglycolen oder deren Gemischen ausgewählt wird.

2. Polymerisierbare Zusammensetzung nach Anspruch 1, wobei die cycloaliphatische Epoxidverbindung ein Monoepoxid, ein Diepoxid, oder ein Gemisch davon ist.

3. Polymerisierbare Zusammensetzung nach einem der vorstehenden Ansprüche, wobei der Photopolymerisationsstarter ein Aryloniumsalz und/oder ein Ferroceniumsalz ist.

4. Polymerisierbare Zusammensetzung nach einem der vorstehenden Ansprüche, wobei das molare Verhältnis der Epoxidgruppen der cycloaliphatischen Epoxidverbindung zu den Hydroxylgruppen des einwertigen Alkohols 1,0:1,0 bis 4,0:1,0 beträgt.

5. Polymerisierbare Zusammensetzung nach einem der vorstehenden Ansprüche, wobei die Hydroxylfunktionalität aller organischen Verbindungen der polymerisierbaren Zusammensetzung mit OH-Gruppe(n) 1,0 beträgt.

6. Zusammensetzung, umfassend ein thermoplastisches Oligomer oder Polymer und erhältlich durch Oligomerisation oder Polymerisation der polymerisierbaren Zusammensetzung gemäß einem der Ansprüche 1-5, wobei das thermoplastische Oligomer oder Polymer einen Erweichungspunkt, gemessen nach der Ring-und-Kugel-Methode, im Bereich von 35 °C bis 90 °C aufweist.

7. Zusammensetzung nach Anspruch 6, wobei der Erweichungspunkt im Bereich von 40°C bis 80°C liegt.

8. Verfahren zur Herstellung eines thermoplastischen Oligomers oder Polymers, umfassend
- die Bereitstellung der polymerisierbaren Zusammensetzung nach einem der Ansprüche 1-5,
- Bestrahlung der polymerisierbaren Zusammensetzung über einen Zeitraum, so dass ein thermoplastisches Oligomer oder Polymer erhalten wird.

9. Verfahren nach Anspruch 8, wobei die Bestrahlungsdauer so gewählt wird, dass das thermoplastische Oligomer oder Polymer einen Erweichungspunkt, gemessen nach der Ring-und-Kugel-Methode, im Bereich von 35 °C bis 90 °C aufweist.

10. Verfahren nach Anspruch 8 oder 9, wobei die Bestrahlungsdauer 30 Sekunden bis 300 Sekunden beträgt.

11. Verfahren nach einem der Ansprüche 8-10, wobei die Bestrahlung der polymerisierbaren Zusammensetzung im Bereich von 280 nm bis 450 nm erfolgt.

12. Verfahren zum Fixieren oder Blocken eines optischen Bauelements auf einem Halteelement, umfassend folgende Schritte:
- Aufbringen der polymerisierbaren Zusammensetzung gemäß einem der Ansprüche 1-5 auf dem optischen Bauelement und/oder dem Halteelement,
- in Kontakt bringen des optischen Bauelements mit dem Halteelement und
- Bestrahlung der polymerisierbaren Zusammensetzung über einen Zeitraum, so dass ein thermoplastisches Oligomer oder Polymer erhalten wird.

13. Verwendung der polymerisierbaren Zusammensetzung nach einem der Ansprüche 1-5 zur Herstellung eines thermoplastischen Klebstoffs.

14. Verwendung nach Anspruch 13 zum Fixieren, Blocken, Kleben oder Kitten von Linsen oder von Planoptik.

15. Verwendung der polymerisierbaren Zusammensetzung nach einem der Ansprüche 1-5 zum Aufbringen einer Schutzschicht oder Schutzlackierung auf der Oberfläche eines optischen Bauelements.

16. Verfahren zur Aufbringung einer Schutzschicht oder Schutzlackierung auf ein optisches Bauelement, umfassend
- Aufbringen der polymerisierbaren Zusammensetzung nach einem der Ansprüche 1-5 auf der Oberfläche eines optischen Bauelements in Form einer Schicht oder eines Films,
- Bestrahlung der polymerisierbaren Zusammensetzung über einen Zeitraum, so dass ein thermoplastisches Oligomer oder Polymer erhalten wird.

17. Verfahren nach Anspruch 16, wobei die polymerisierbare Zusammensetzung mit einem Lösungsmittel verdünnt und anschließend auf die Oberfläche des optischen Bauelements aufgebracht wird.

18. Optisches Bauelement mit einer Oberflächenbeschichtung, die eine Zusammensetzung nach einem der Ansprüche 6-7 aufweist.

## Claims

1. Polymerisable composition, comprising
- a cycloaliphatic epoxide compound,
- a monovalent alcohol,
- a photo-polymerisation initiator,
in which the molar ratio of the epoxide groups of the cycloaliphatic epoxide compound to the hydroxyl groups of the monovalent alcohol is 0.9:1.0 to 4.0:1.0 and
the hydroxyl functionality of all the organic compounds of the polymerisable composition containing OH group(s) is in the range of from 1.0 to 1.25, and the monovalent alcohol is selected from alkanols, cycloalkanols, aryl alcohols, monoalkyl ethers of polyoxyalkylene glycols or monoalkyl ethers of alkylene glycols or mixtures thereof.

2. Polymerisable composition as claimed in claim 1, in which the cycloaliphatic epoxide compound is a mono-epoxide, a di-epoxide or a mixture thereof.

3. Polymerisable composition as claimed in one of the preceding claims, in which the photo-polymerisation initiator is an arylonium salt and/or a ferrocenium salt.

4. Polymerisable composition as claimed in one of the preceding claims, in which the molar ratio of the epoxide groups of the cycloaliphatic epoxide compound to the hydroxyl groups of the monovalent alcohol is 1.0:1.0 to 4.0:1.0.

5. Polymerisable composition as claimed in one of the preceding claims, in which the hydroxyl functionality of all the organic compounds of the polymerisable composition with OH group(s) is 1.0.

6. Composition comprising a thermoplastic oligomer or polymer which can be obtained by oligomerisation or polymerisation of the polymerisable compound as claimed in one of claims 1 - 5, in which the thermoplastic oligomer or polymer has a softening point, as measured in accordance by the ring and ball method, in the range of from 35°C to 90°C.

7. Composition as claimed in claim 6, in which the softening point is in the range of from 40°C to 80°C.

8. Method of producing a thermoplastic oligomer or polymer comprising
- providing the polymerisable composition as claimed in one of claims 1-5,
- irradiating the polymerisable composition for a period of time so that a thermoplastic oligomer or polymer is obtained.

9. Method as claimed in claim 8, in which the irradiation time is selected so that the thermoplastic oligomer or polymer has a softening point, as measured by the ring and ball method, in the range of from 35°C to 90°C.

10. Method as claimed in claim 8 or 9, in which the irradiation time is 30 seconds to 300 seconds.

11. Method as claimed in one of claims 8 - 10, in which irradiation of the polymerisable composition takes place in the range of from 280 nm to 450 nm.

12. Method of fixing or blocking an optical component on a retaining element, comprising the following steps:
- applying the polymerisable composition as claimed in one of claims 1 - 5 to the optical component and/or the retaining element,
- placing the optical component in contact with the retaining element and
- irradiating the polymerisable composition for a period of time so that a thermoplastic oligomer or polymer is obtained.

13. Use of the polymerisable composition as claimed in one of claims 1-5 for producing a thermoplastic adhesive.

14. Use as claimed in claim 13 for fixing, blocking, adhering or cementing lenses or flat optical components.

15. Use of the polymerisable composition as claimed in one of claims 1 - 5 for applying a protective coating or protective lacquer to the surface of an optical component.

16. Method of applying a protective coating or protective lacquer to an optical component, comprising
- applying the polymerisable composition as claimed in one of claims 1 - 5 to the surface of an optical component in the form of a coating or film,
- irradiating the polymerisable composition for a period of time so that a thermoplastic oligomer or polymer is obtained.

17. Method as claimed in claim 16, in which the polymerisable composition is diluted with a solvent and then applied to the surface of the optical component.

18. Optical component with a surface coating containing a composition as claimed in one of claims 6-7.

## Revendications

1. Composition polymérisable, contenant
- un composé époxyde cycloaliphatique,
- un alcool monovalent,
- un initiateur de photopolymérisation,
dans laquelle le rapport molaire entre les groupes époxyde du composé époxyde cycloaliphatique et les groupes hydroxyle de l'alcool monovalent est compris entre 0,9:1,0 et 4,0:1,0, et
la fonctionnalité hydroxyle de tous les composés organiques de la composition polymérisable avec le(s) groupe(s) OH est comprise dans la plage de 1,0 à 1,25, et l'alcool monovalent est sélectionné parmi des alcanols, des cycloalcanols, des arylalcools, des monoalkyléthers de polyoxyalkylèneglycols ou des monoalkyléthers d'alkylèneglycols ou de leurs mélanges.

2. Composition polymérisable selon la revendication 1, dans laquelle le composé époxyde cycloaliphatique est un monoépoxyde, un diépoxyde ou un mélange de ceux-ci.

3. Composition polymérisable selon l'une des revendications précédentes, dans laquelle l'initiateur de photopolymérisation est un sel d'arylonium et/ou un sel de ferrocénium.

4. Composition polymérisable selon l'une des revendications précédentes, dans laquelle le rapport molaire entre les groupes époxyde du composé époxyde cycloaliphatique et les groupes hydroxyle de l'alcool monovalent est compris entre 1,0:1,0 et 4,0:1,0.

5. Composition polymérisable selon l'une des revendications précédentes, dans laquelle la fonctionnalité hydroxyle de tous les composés organiques de la composition polymérisable avec groupe(s) OH est de 1,0.

6. Composition comprenant un oligomère ou un polymère thermoplastique et pouvant être obtenue par oligomérisation ou polymérisation de la composition polymérisable selon l'une des revendications 1 à 5, où l'oligomère ou le polymère thermoplastique présente un point de ramollissement, mesuré selon la méthode par bille et anneau, dans la plage de 35 °C à 90°C.

7. Composition selon la revendication 6, dans laquelle le point de ramollissement est compris dans la plage de 40 °C à 80°C.

8. Procédé de préparation d'un oligomère ou d'un polymère thermoplastique, comprenant :
- la préparation de la composition polymérisable selon l'une des revendications 1 à 5,
- l'irradiation de la composition polymérisable sur une durée telle que l'on obtient un oligomère ou un polymère thermoplastique.

9. Procédé selon la revendication 8, dans lequel la durée d'irradiation est sélectionnée de façon telle que l'oligomère ou le polymère thermoplastique présente un point de ramollissement, mesuré selon la méthode par bille et anneau, dans la plage de 35 °C à 90°C.

10. Procédé selon la revendication 8 ou 9, dans lequel la durée d'irradiation est comprise entre 30 secondes et 300 secondes.

11. Procédé selon l'une des revendications 8 à 10, dans lequel l'irradiation de la composition polymérisable est comprise dans la plage de 280 nm à 450 nm.

12. Procédé de fixation ou de blocage d'un composant optique sur un élément de retenue, comprenant les étapes suivantes :
- l'application de la composition polymérisable selon l'une des revendications 1 à 5 sur un module optique et/ou un élément de retenue,
- la mise en contact du module optique avec l'élément de retenue, et
- l'irradiation de la composition polymérisable sur une durée telle qu'on obtient un oligomère ou un polymère thermoplastique.

13. Utilisation d'une composition polymérisable selon l'une des revendications 1 à 5 pour fabriquer une colle thermoplastique.

14. Utilisation selon la revendication 13, pour fixer, bloquer, coller ou cimenter des objectifs ou des optiques planes.

15. Utilisation de la composition polymérisable selon l'une des revendications 1 à 5 pour appliquer une couche protectrice ou une laque protectrice sur la surface d'un module optique.

16. Procédé d'application d'une couche protectrice ou d'une laque protectrice sur un module optique, comprenant :
- l'application de la composition polymérisable selon l'une des revendications 1 à 5 sur la surface d'un module optique sous la forme d'une couche ou d'un film,
- l'irradiation de la composition polymérisable sur une durée telle qu'on obtient un oligomère ou un polymère thermoplastique.

17. Procédé selon la revendication 16, dans lequel la composition polymérisable est diluée avec un solvant puis est appliquée sur la surface du module optique.

18. Module optique présentant un revêtement de surface qui présente une composition selon l'une des revendications 6-7.
